# EUROPEAN PATENT SPECIFICATION

(11) **EP 0 657 118 B1**
(45) Date of publication and mention of the grant of the patent: **08.03.2000**
(21) Application number: 94118517.5
(22) Date of filing: 24.11.1994
(51) Int. Cl.: A44B 18/00, B29C 33/14, B29C 70/00

(54) **Fastener member for moulding and production of plastic article with fastener member moulded thereon**
Befestigungselement zum Formen und zur Herstellung eines Kunststoffartikels mit darauf geformtem Befestigungselement
Elément de fixation pour le moulage et la fabrication d'un article en plastique sur lequel est fixé par moulage un élément de fixation

(30) Priority: 29.11.1993 JP 32593093
(43) Date of publication of application: 14.06.1995
(73) Proprietor: KURARAY CO., LTD., Kurashiki-City Okayama Prefecture 710 (JP)
(72) Inventor: Ohno, Yuji, Kurashiki-city (JP); Shimamura, Kunihiko, Kurashiki-city (JP); Tanokura, Tohru, Kitaku, Osaka (JP)
(74) Representative: Strehl Schübel-Hopf & Partner

(56) References cited:
- EP-A- 0 439 969
- FR-A- 2 423 666
- FR-A- 2 609 758
- PATENT ABSTRACTS OF JAPAN vol. 17, no. 655 (C-1136) 6 December 1993 & JP-A-05 211 910 (YOSHIDA KOGYO K. K.) 24 August 1993

## Description

### Field of the Invention

The present invention relates to a fastener member for moulding which is embedded in the surface of a cushion when an automotive seat cushion or office chair cushion is moulded. The fastener member moulded in the cushion is used to fix the upholstery material (such as cloth) covering the cushion.

### Description of the Prior Art

An automotive seat or office chair is usually made up of a cushion of foamed polyurethane or the like and an upholstery material covering it. According to prior art technology, the cushion has moulded wires and the upholstery is attached to the cushion by means of metal fixing members which engage the moulded wires and the upholstery. This procedure is accomplished by means of an electric tool.

A new method utilising insert moulding has recently been proposed for the production of an automotive seat. This method involves the steps of inserting flat fastener tapes in the recesses of the mould, injecting a foaming resin into the mould, and expanding the resin such that the fastener tapes are integrally embedded in the surface of the cushion. The fastener tape has a large number of engaging elements on its top and a large number of anchoring elements on its back. The moulded cushion, therefore, has the engaging elements bared on its surface The cushion is finally covered with an upholstery material having elements capable of engagement with the engaging elements of the fastener tape.

The above-mentioned procedure needs a provision for preventing the foaming resin from entering the gap between the fastener tape and the recess of the mould in which it is fitted, because there is a chance for the engaging elements to be buried in the foamed resin entering the gap.

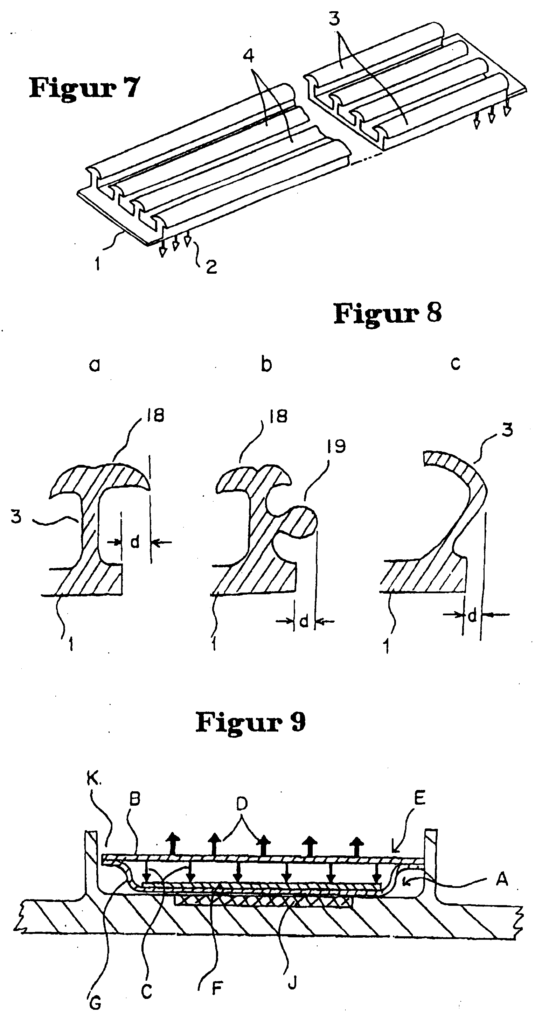

This problem is solved by the use of a fastener member as shown in Figure 9. There, the fastener member **A** is made of a flat fastener tape **E**, a steel strip **F**, and a cover film **G**. The flat fastener tape **E** has a large number of engaging elements **C** and anchoring elements **D** formed on both sides of its substrate. The steel strip **F**, which is placed on the engaging elements **C**, causes the fastener tape **E** to be attracted to the magnet **J** arranged in the recess of the mould. The cover film **G** covers the steel strip **F** and the engaging elements **C**. The cover film **G** has its periphery bonded to the periphery of the flat fastener tape **E** by adhesion or heat sealing.

Prior to the moulding operation, the fastener member **A** is fixed in position by the magnetic force exerted on the steel strip **F** by the magnet **J** arranged in the recess **K** of the mould. Subsequently, a foaming resin is injected into the mould so as to produce a cushion in which the anchoring elements are embedded. The cover film prevents the engaging elements from being buried in the foaming resin. After removal from the mould, the cover film **G** and the steel strip **F** are removed, so that the engaging elements **C** of the flat fastener are bared on the cushion.

Another fastener member of moulded-in type for the same purpose as mentioned above is disclosed in JP-A-64-9708. This is a fastener tape having a groove on its entire periphery. It is fitted to the mould by the aid of a groove which is formed on the periphery of the recess in the mould, so that the fastener groove engages with recess groove in the mould.

The document further discloses that the fastener tape has a flat rim outside the groove, and it seems that the fastener tape is fitted to the recess of the mould by the combination of the groove and the flat rim.

Another fastener member of the moulded-in type is disclosed in JP-Y-3-58109. This is a flat fastener tape having on its entire periphery a fitting member of rectangular section. It has the disadvantage of being undesirably wide due to the fitting member. As another disadvantage, the fitting member has to be formed separately from the flat fastener tape and then attached to the periphery thereof. This disadvantage leads to low productivity.

The above-mentioned method of attaching the upholstery to the cushion by the aid of moulded wires and metal fixing members (so-called Hogring method) has the disadvantage of requiring a large number of metal fixing members and a great deal of labour. In addition, it poses a problem with safety and health, e.g. injuries and tenosynovitis, as a result of the use of an electric tool for the metal fixing members. Another disadvantage is that the cushion after scrapping cannot be easily recycled because it contains metal parts such as wires and fixing members.

The fastener member shown in Figure 9 has the disadvantage that it is necessary to remove the steel strip **F** and the fastener cover film **G** after moulding. After removal, they are disposed of as waste. Another disadvantage is that the film **G** has to be completely removed with great care; even a small piece of film remaining on the engaging elements reduces the engaging force and impairs the appearance. The removal of the film is troublesome and the removal of the steel strip **F** may injure the fingers.

The fastener member disclosed in JP-A-64-9708 has the disadvantage of a complex construction in both the fastener tape and the mould. The former has a groove on its periphery and the latter is provided with a grooved ridge which engages the groove of the fastener tape. In addition, the groove increases the width of the fastener but has no engaging elements. This is undesirable especially in the case of narrow fasteners.

Another fastener member for embedding in a moulded article is disclosed in FR-A-2 609 758. The front side of its substrate is provided with engaging elements and barriers which run along the edges of the substrate on the front side. For embedding the fastener in a moulded article, the fastener is placed with its front side down over a recess in a mould. The recess is smaller than the fastener so that the barriers engage the edges of the recess to seal the interior of the recess and the engaging elements against plastic material injected into the mould. This fastener member has the disadvantage that it cannot easily be placed and retained precisely over the recess.

A still further fastening member to be embedded in a moulded article is disclosed in FR-A-2 423 666. This fastener member has a flat tape-like substrate which is slightly wider than the recess in the mould. It is placed into the recess with the engaging elements on its front facing the bottom of the recess. As it is wider than the recess, it bends and assumes a concave shape. The substrate is provided with weak lines (notches) along its longitudinal edges which facilitate the bending. This fastener member has the disadvantage that it cannot easily be bent uniformly and placed stably into the recess against its tension.

### Summary of the Invention

It is an object of the invention to provide a fastener member for embedding or moulding in or on a moulded article, which permits high productivity and effective protection of its engaging elements during moulding.

This object is solved by the fastener member set forth in claim 1. A method for producing a moulded article having such a fastener member is set forth in claim 4. The subclaims are directed to preferred embodiments of the invention.

A fastener member of the invention can be a fastener tape which can be easily fixed to a recess in a mould prior to moulding. It has the advantage that it can be made small and enables recycling of the moulded article with the fastener member incorporated.

In another embodiment of the present invention, a fastener member for moulding is provided which is a fastener tape that is constructed as mentioned above and has anchoring elements on its back. This structure provides better bonding between the moulded article and the fastener member.

Another embodiment of the present invention provides a fastener member to be embedded in a moulded article by moulding which is a fastener tape having engaging elements on the top of its substrate and ridges extending continuously in the longitudinal direction on both edges of the back of its substrate, with the difference between the width of the outermost parts of both ridges and the width of the recess in the mould being in the range of -1 to 5 mm, and the difference between the length of the fastener tape and the length of the recess in the mould in the range of -5 to 5 mm.

The present invention further provides a process for producing a plastic moulded article having fastener members moulded thereon, the process comprising fitting the above-mentioned fastener member in the recess of the mould such that the engaging elements on its surface are directed to the recess of the mould and the ridges of the fastener member substantially seal the gap between the fastener member and the side wall of the recess of the mould, and injecting a resinous composition into the mould.

### Brief Description of the Drawings

The drawings show comparative examples and, where ridges with extensions on their top are shown, embodiments of the invention.
- Figure 1: is a perspective view showing a fastener member.
- Figure 2: is a sectional view of the fastener member taken along the line X-X in Figure 1.
- Figure 3: is a schematic sectional view showing he fastener member fitted in the mould.
- Figure 4: is a sectional view illustrating the production of a fastener member.
- Figure 5: is a sectional view of a fastener member.
- Figure 6: is a partly sectional view showing an automotive seat cushion as a resin moulded article.
- Figure 7: is a perspective view of another fastener member.
- Figure 8: are sectional views of particular shapes of ridges formed on the back of the fastener member.
- Figure 9: is a sectional view showing the conventional fastener member and the way it is placed in the mould.

### Detailed Description of the Drawings

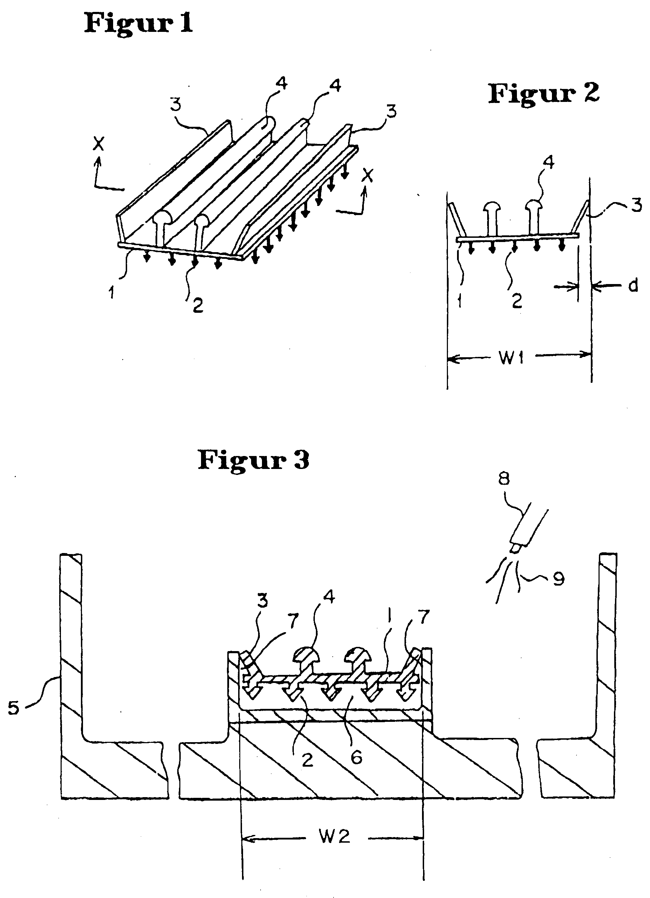

The fastener member shown in Figures 1 and 2 is made up of a substrate **1**, a large number of engaging elements **2** formed on the top of the substrate, and ridges **3** extending continuously in the longitudinal direction on the edges of the back of the substrate Each ridge **3** is constructed such that its outermost part projects outwards about 0.3 to 5 mm from the edge of the substrate **1**. In the embodiment shown in Fig 2, the ridge **3** protrudes a distance d from the edge of the substrate **1**, and the magnitude of d is about 0.3 to 5 mm. The substrate may optionally be provided on its back with anchoring elements **4**.

Figure 3 shows how he fastener member shown in Figure 1 is fitted in the recess **6** of the mould **5**. The recess has a width which is slightly smaller than or approximately equal to that of the fastener member. When the fastener member is fitted in the recess, the ridges **3** protrude outwards from the edges of the substrate. Thus, the ridges approach or touch the wall **7** of the recess, thereby substantially sealing the gap between them. This sealing isolates the engaging elements **2** from the moulding material **9** which is afterwards injected into the mould.

The ridge has a sufficiently large protrusion d which firmly seals the gap owing to its resilience. In the present invention, the protrusion d should be about 0.3 to 5 mm. The magnitude of d depends on the width of the substrate. It may be greater than 5 mm for wider substrates. An excessively protruding ridge will deform the fastener member in the recess or make it difficult to fit the fastener member into the recess owing to its excessive resilience.

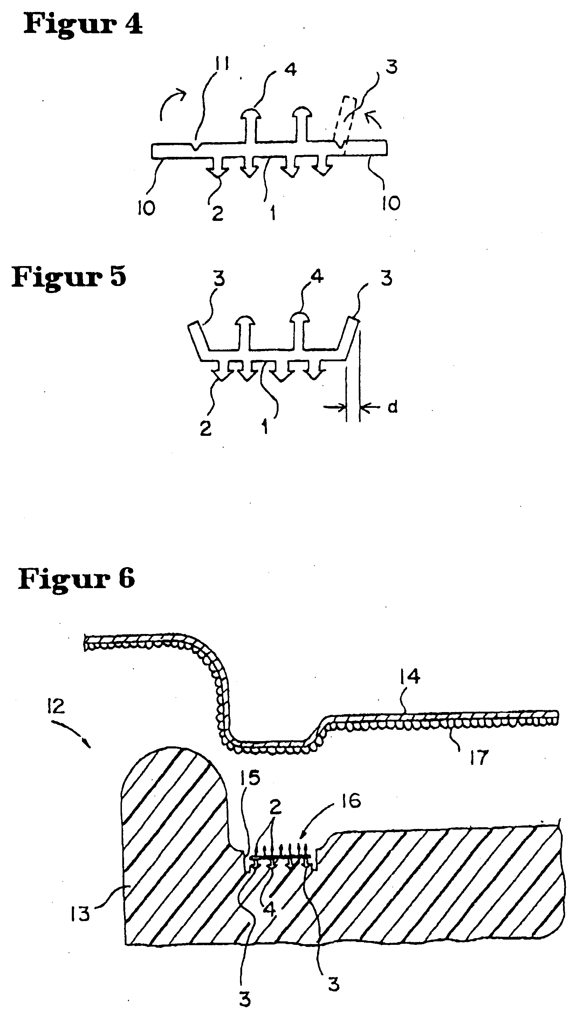

Figures 4 and 5 are schematic diagrams illustrating the process of producing the fastener members. The fastener tape shown in Figure 4 is made up of a substrate **1** and bendable strips **10** extending from the edges of the substrate. The bendable strips **10** are bent toward the back of the substrate along scores **11** as shown in Figure 4 so that they serve as ridges **3**. In the case of the fastener member shown in Figure 5, the protrusion d should be about 0.3 to 5 mm and the magnitude of d may be adjusted by suitably locating the scores **11**.

According to the present invention, the ridges **3** are formed on the back of the substrate **1** and therefore they do not increase the width of the substrate or fastener tape. This structure is of great advantage in the case of a narrow fastener tape and permits the engaging elements to be formed on the entire surface of the fastener member. In addition, the fact that the ridges **3** are integrally formed with the fastener tape contributes to higher productivity than if fitting elements are produced separately and subsequently attached to a fastener tape.

The fastener member of the present invention should be fitted in the recess of the mould in such a manner that there is no gap between the ridge of the fastener member and the wall of the recess. However, small gaps are permissible because the ridge is pushed against the wall of the recess to seal the gaps by the resinous composition injected into the mould. In addition, small gaps are permissible because a highly viscous resinous composition injected into the mould will not pass them and or pass them only to a limited extent; hence the engaging elements are isolated from the resinous composition. All of the above sealings are regarded as sealings according to this invention.

Referring to W1 and W2 indicated in Figures 2 and 3, the ridges on the fastener member should be formed such that the difference between the width W1 measured between the outermost parts of both ridges and the width W2 of the recess in the mould is in the range of -1 to 5 mm, i.e. W1 - W2 = -1 to 5 mm. This requirement should be fulfilled to facilitate the fitting of the fastener member in the recess and prevent the resinous composition from flowing into the recess. The difference W1 - W2 should preferably be from -0.5 to 2 mm. If W1 is grater than W2 within this range, the resinous composition may be effectively kept out because the fastener member undergoes elastic deformation to come into close contact with the wall of the recess.

At the time of moulding, the fastener member of the present invention may pose a problem in that resinous composition may pass through gaps existing between the longitudinal ends of the fastener member and the adjacent end walls of the recess. However, this problem is not serious because the length of the fastener member is much greater than its width. The length of the fastener tape is greater than 10 cm, preferably several tens of a centimetre, while the width is 7 to 50 mm, preferably 7 to 20 mm, and most desirably 10 to 15 mm. Therefore, any resin passing through the gap at the longitudinal ends will affect only a limited number of engaging elements and is hence tolerable. Usually, the desired sealing is achieved if the fastener member has a length substantially equal to that of the recess in the mould.

The difference between the length of the fastener member and that of the recess should be in the range of -5 to 5 mm, preferably -2 to 2 mm. If it is smaller than -5 mm, there will be a large gap through which the resinous composition can reach the engaging elements. If it is larger than 5 mm, it will be difficult to fit the fastener member in the recess of the mould or the fastener member will be deformed in the recess of the mould. A better sealing at the end of the fastener member may be accomplished by providing that end with a flat part or sealer fitted with a flat part formed in the middle of the wall of the recess.

### Examples

The examples of the invention will be explained with reference to the drawings.

Figure 6 is a partly sectional view showing the structure of an automotive seat cushion as an example of the fastener member according to the present invention. There is shown a seat **12** which is a moulded cushion **13** of foamed polyurethane or the like. The cushion **13** is covered with an upholstery material **14**. The cushion seat has grooves **15** which may be in the shape of a square bracket (**[**) in which fastener members **16** are embedded by moulding. Each fastener member **16** has engaging elements on its top and the upholstery material **14** is backed with a woven or non-woven cloth having looped fibres which cooperate with the engaging elements.

Examples of the fastener member **16** are shown in Figure 1, 5, or 7. The fastener member **16** has a large number of engaging elements on its top which engage with the upholstery material. The engaging elements may be mushroom-, hook- arrowhead-shaped. On its back, the fastener member **16** preferably has anchoring elements **4** with heads of arc- or mushroom-shaped cross-section. However, they may be omitted if the substrate is narrow; in this case, the ridges protruding from the edges may function as anchoring elements.

The fastener member shown in Figure 7 has its back provided with two ridges **3** protruding from the edges and two anchoring elements **4** with heads of arc-shaped cross-section. Each ridge has an enlarged head so that it firmly anchors in the moulding resin. As a result, the fastener member is retained in the cushion without the possibility for the fastener member to peel off at the edges. The anchoring elements may be formed either of long continuous ridges in the longitudinal direction or of large numbers of discrete engaging elements.

The ridge **3** may have any of the shapes shown in Figures 8a, 8b, and 8c. The ridge **3** shown in Figure 8a has an anchor-like head, the right side of which protrudes outwards from the edge of the substrate by the distance d. The ridge **3** shown in Figure 8b has a head **18** and a projection **19** at the middle, with the outermost side of the projection again protruding outwards by d from the edge of the substrate. The ridge **3** shown in Figure 8c is curved outwards such that the outermost part of the bend protrudes outwards by d from the edge of the substrate.

The width of the fastener member substrate depends on its use. It is usually 7 to 50 mm, preferably 7 to 20 mm, most desirably 10 to 15 mm. The fastener tape may be moulded from polyolefin resin, such as polyethylene or polypropylene, polyamide resin such as nylon, polyester resin, polyurethane resin, or polyvinyl chloride resin, either alone or in combination.

No restrictions are imposed on the moulding method of the fastener member. The well-known extrusion process may be employed. In this case, a thermoplastic resin is extruded through a die having slits for the substrate, ridges and anchoring elements with such cross-sections as shown in Figures 1, 4, 7 and 8. After cooling, the extruded tape is cut in the ridges on the top at regular intervals in the longitudinal direction, by a rotary cutter set at an angle with respect to the longitudinal direction. The ridges on the back are not cut.

The resulting tape is stretched in its longitudinal direction using drawing rolls so that the cut ridges on the top are formed into a large number of discrete engaging elements having an arrowhead-like cross section, while the ridges at the edges on the back remain continuous. These ridges should be continuous so that they achieve sealing for the resinous composition.

The fastener member shown in Figure 1 or Figure 7 has ridges at the edges and anchoring elements which are formed directly by the extrusion die. In this case, it is difficult to cut only the middle ridges between two lateral ridges and hence it is difficult to provide the back of the substrate with a large number of discrete anchoring elements. In the case of the flat fastener shown in Figure 4, it is possible to provide the back of the substrate with a large number of discrete anchoring elements, if the ridges are cut, with the bendable strips not raised, and then the substrate is stretched.

It is not always necessary for the above-mentioned elements to have identical shapes or cross-sections. No restrictions are imposed on the height of the engaging and anchoring elements. They are usually about 1 to 15 mm, preferably about 2 to 6 mm high.

The fastener member of the present invention may be produced by sticking the engaging elements into the substrate. In this case, the engaging element may take any shape such as that of a hook or arrowhead.

The production of an automotive seat cushion provided with the fastener member of the present invention is explained below. The fastener tape **1** as shown in Figure 7 is placed in the recess **6** of the mould **5** as shown in Figure 3, with the engaging elements **2** facing the recess, and the ridges **3** and anchoring elements **4** facing the cavity of the mould.

The fastener tape **1** is placed in the recess such that the ridges touch or approach the side walls 7, 7 of the recess. In this way, the ridges seal the gap between the fastener member and the recess, thereby preventing liquid foaming resinous composition from entering the recess.

The mould is then filled with a foaming resin such as polyurethane which is subsequently allowed to foam and expand. After curing, the cushion **13** is discharged from the mould **5**. The resultant cushion **13** has the fastener member **15** integrally embedded therein. The engaging elements **2** are bared, without being buried in the foamed resin. The ridges and anchoring elements are embedded in the cushion **13** and hence the fastener member is firmly fixed to the cushion.

The resulting cushion **13** is covered with the upholstery material **14** as shown in Figure 6, such that the engaging elements **2** catch the tiny loops **17** on the back of the upholstery material **14**. In this way the upholstery material **14** tightly fits to the cushion **13** in conformity with its configuration.

In the foregoing examples, the fastener member of the present invention was applied to an automotive seat cushion. It is likewise applicable to many other shaped articles.

### Effect of the Invention

According to the present invention, the fastener member for moulding can be securely fitted in the recess of the mould in a simple manner. It seals well the lengthwise gaps between itself and the recess, and this seal prevents resinous composition from entering the recess. The fastener member of the present invention can be made narrower than a conventional one, yet can be provided with engaging elements on the entire surface of the fastener tape. Therefore, it permits upholstery material to be firmly fixed with a narrow fastener. If the fastener member is embedded in a deep and narrow recess of the cushion, it is possible tightly to fix the upholstery material as if it were suspended by wires and metal fixing members. Thus, the upholstery material will have a good appearance. The fastener member is superior in productivity, safety and workability, and it permits recycling of the cushion in which it is embedded.

## Claims

1. A fastener member, comprising:
a tape-like substrate (1) having engaging elements (2) on its front and ridges (3) extending continuously along both its longitudinal edges,
**characterised** in that
the ridges (3) are formed on the back of the substrate (1) and each ridge has an enlarged portion (18, 19) on its top and its outermost part projects about 0.3 to 5 mm beyond the respective edge of the substrate (1).

2. A fastener member according to claim 1, wherein the substrate (1) and the ridges (3) are commonly formed by extrusion through a die.

3. A fastener member according to any of claims 1 to 2, having anchoring elements (4) on its back.

4. A process for producing a plastic moulded article having a fastener member moulded thereon, comprising the following steps:
fitting a fastener member as defined in any of claims 1 to 3 in a recess (6) of a mould such that its front side with the engaging elements faces the recess (6) and the ridges (3) of the fastener member substantially seal the gap between the fastener member and the side walls of the recess (6), and
injecting a resinous composition into the mould to form said article.

5. A process according to claim 4, wherein the difference between the width at the outermost parts of both ridges and the width of the recess is in the range of -1 to 5 mm and the difference between the length of the tape-like substrate (1) and the length of the recess is in the range of -5 to 5 mm.

## Patentansprüche

1. Befestigungselement, aufweisend:
ein bandartiges Substrat (1) mit Eingriffselementen (2) auf seiner Vorderseite und Rippen (3), die ununterbrochen entlang der beiden Längskanten verlaufen,
**dadurch gekennzeichnet, daß**
die Rippen (3) auf der Rückseite des Substrats (1) ausgebildet sind und jeweils einen vergrößerten Abschnitt (18, 19) an ihrem Oberteil aufweisen und ihr äußerstes Teil etwa 0,3 bis 5 mm über die entsprechende Kante des Substrats (1) hinausragt.

2. Befestigungselement nach Anspruch 1, wobei das Substrat (1) und die Rippen (3) durch Extrudieren durch eine Düse gemeinsam gebildet sind.

3. Befestigungselement nach einem der Ansprüche 1 bis 2 mit Verankerungselementen (4) auf seiner Rückseite.

4. Verfahren zur Herstellung eines Plastikformgegenstands mit einem angeformten Befestigungselement, mit folgenden Schritten:
Einbringen eines Befestigungselements nach einem der Ansprüche 1 bis 3 in eine Vertiefung (6) einer Form, so daß seine Vorderseite mit den Eingriffselementen der Vertiefung (6) zugewandt ist und die Rippen (3) des Befestigungselements die Lücke zwischen diesem und den Seitenwänden der Vertiefung (6) praktisch abdichten, und
Einspritzen einer Harzzusammensetzung in die Form, um den Gegenstand zu bilden.

5. Verfahren nach Anspruch 4, wobei die Differenz zwischen der Breite der äußersten Teile der beiden Rippen und der Breite der Vertiefung im Bereich von -1 bis 5 mm und die Differenz zwischen der Länge des bandartigen Substrats (1) und der Länge der Vertiefung im Bereich von -5 bis 5 mm liegt.

## Revendications

1. Élément de fixation, comprenant :
un substrat (1) analogue à un ruban, comportant des éléments d'engagement (2) sur sa partie frontale, et des nervures (3) qui s'étendent en continu le long de ses deux bordures longitudinales,
caractérisé en ce que
les nervures (3) sont formées sur le dos du substrat (1), et chaque nervure comporte une partie élargie (18, 19) sur son sommet, et sa partie la plus extérieure se projette d'environ 0,3 à 5 mm au-delà de la bordure respective du substrat (1).

2. Élément de fixation selon la revendication 1, dans lequel le substrat (1) et les nervures (3) sont formés en commun par extrusion à travers une matrice.

3. Élément de fixation selon l'une ou l'autre des revendications 1 et 2, comportant des éléments d'ancrage (4) sur son dos.

4. Procédé pour produire un article moulé en matière plastique comportant un élément de fixation moulé sur lui-même, comprenant les étapes suivantes :
on fixe un élément de fixation tel que défini dans l'une quelconque des revendications 1 à 3 dans un évidement (6) dans un moule, de telle façon que son côté Irontal avec les éléments d'engagement soit situé en face de l'évidement (6) et les nervures (3) de l'élément de fixation étanchent sensiblement l'intervalle entre l'élément de fixation et les parois latérales de l'évidement (6), et
on injecte une composition résineuse dans le moule pour former ledit article.

5. Procédé selon la revendication 4, dans lequel la différence entre la largeur des parties les plus extérieures des deux nervures et la largeur de l'évidement est située dans la plage de - 1 à 5 mm, et la différence entre la longueur du substrat (1) en forme de ruban et la longueur de l'évidement est située dans la plage de - 5 à 5 mm.
